# EUROPEAN PATENT APPLICATION

(11) **EP 4 556 867 A1**
(43) Date of publication of application: **21.05.2025**
(21) Application number: 23315428.5
(22) Date of filing: 20.11.2023
(51) Int. Cl.: G01H 3/08

(54) **METHOD AND SYSTEM FOR ANOMALOUS SOUND DETECTION**

(71) Applicant: IMRA Europe S.A.S., 06904 Sophia Antipolis (FR)
(72) Inventor: ABAD, Frédéric, 06220 Vallauris (FR); BENDAHAN, Rémy, 06160 Juan Les Pins (FR); NAKANO, Yuta, 06560 Valbonne (FR)
(74) Representative: Novagraaf International SA

(57) **Abstract**

The method and system address the need for the detection of anomalous, malfunctioning products at the end of production lines as part of Quality Control. A digital sound recording for inspection is received by the system. The received digital sound recording is transformed into a two-dimensional frequency-time spectrogram, which is further split into into a plurality of spectrogram snippets, wherein each spectrogram snippet comprises a plurality of consecutive spectrogram frames. Each spectrogram frame is divided into a plurality of frequency bins representative of a frequency range of the spectrogram. Snippet enhancement is performed on each of the plurality of spectrogram snippets and an anomaly score is derived for each snippet. Based on the anomaly scores, an indication of an anomaly is determined for the received digital sound recording.

## Description

### TECHNICAL FIELD

The present disclosure relates to the field of detection of anomalous sounds in products or devices. In particular, the present disclosure relates to detecting anomalous sounds by way of a locally masked convolution method.

### BACKGROUND

There is an industrial need for the detection of anomalous, malfunctioning products at the end of production lines as part of Quality Control. For products comprising multiple mechanical parts, anomalies in these mechanical parts often lead to anomalies in the sounds they produce at operating time.

Quality Control by Anomalous Sound Detection (ASD) is one possible way to detect such defective products. The traditional approach to perform Anomalous Sound Detection is by human inspection i.e., a human agent is listening to the sounds produced by some randomly selected products and is judging whether the sounds are normal or anomalous. However, this approach suffers from several limitations: it is subjective and qualitative; it depends on variable human sensing abilities; and cannot be standardized or up-scaled. Countermeasures to these limitations are being addressed by the development of automatic Al-based Anomalous Sound Detection procedures used for defective product detection. These procedures, where the operating sounds of products are recorded at the end of the production lines and processed by Artificial Intelligence techniques, find naturally their place inside the Industry 4.0 themes of Al-enhanced Manufacturing and Quality Management.

The present disclosure seeks to address these issues.

### SUMMARY

The present invention concerns a method for detecting anomalous sounds, the method comprising:
receiving a digital sound recording;
transforming the received digital sound recording into a two-dimensional frequency-time spectrogram;
splitting the two-dimensional frequency-time spectrogram into a plurality of spectrogram snippets, wherein each spectrogram snippet comprises a plurality of consecutive spectrogram frames, each spectrogram frame being sub-divided into a plurality of frequency bins representative of a frequency range of the spectrogram;
performing snippet enhancement on each of the plurality of spectrogram snippets;
deriving, using a locally masked convolution method, a snippet anomaly score for each of the plurality of enhanced spectrogram snippets; and
determining an indication of the anomaly of the received digital sound recording based on the derived plurality of snippet anomaly scores.

Additional features of the method are set out in the dependent claims.

The present invention further concerns a non-transitory computer readable medium including program instructions for causing a computer carry out the method steps of any of the methods set out above.

The present invention further concerns a computer system comprising a processing unit operable to carry out the method steps of any of the methods set out above.

The computer system may comprise:
a spectrogram processor module;
a snippet extractor module;
a snippet enhancer module;
a density estimator module comprising a locally masked convolution method,
wherein the locally masked convolution method comprises a computing scheme for pre-computed pixel ordering that is adapted to rectangular inputs, and
wherein local masking procedures in the locally masked convolution method are adapted to rectangular inputs and rectangular convolutional kernels; and an anomaly score processing module.

### BRIEF DESCRIPTION OF THE DRAWINGS

Other features, purposes and advantages of the invention will become more explicit by means of reading the detailed statement of the non-restrictive embodiments made with reference to the accompanying drawings.
Figure 1 shows a system, or processing pipeline, for performing anomalous sound detection in accordance with an aspect of the present disclosure.
Figure 2 shows a method for performing anomalous sound detection that may be implemented in the system of Figure 1.
Figure 3 illustrates a method of splitting a frequency-time spectrogram into spectrogram snippets that may be implemented in the system and method of Figures 1 and 2.
Figure 4 shows a method of performing snippet enhancement from a spectrogram snippet that may be implemented in the system and method of Figures 1 and 2.
Figure 5 illustrates a method of deriving a snippet anomaly score that may be implemented in the system and method of Figures 1 and 2
Figure 6 shows a method of determining an indication of the anomaly that may be implemented in the system and method of Figures 1 and 2.

### DETAILED DESCRIPTION

The goal of the present disclosure is to provide an automatic Al-based Anomalous Sound Detection: from the recorded operating sounds of instances of a particular product category, we want to automatically differentiate anomalous sounds from normal ones. We also have the constraint of working with our own dataset where the normal sounds of our product of interest have a complex sound structure comprising several parts with different sound statistics, each part corresponding to a different operating mode.

Deep Learning (DL) techniques have already been used for generic Anomaly Detection and for the more specific task of Anomaly Sound Detection. Because anomalous sounds are usually very rare while many normal sounds are available for training, standard supervised binary normal/anomaly classification approaches cannot be used and must be replaced by unsupervised one-class classification approaches which have been recently benchmarked in a series of challenges: the DCASE Task2 Challenges. The most common techniques rely on Auto-Encoder (AE) neural network models trained on normal data to reconstruct their input with the reconstruction error being used as anomaly score. More recently, neural network models trained on normal data to perform proxy tasks such as product type or product instance identification have been popular, with the output error used as anomaly score. Finally, another range of popular neural networks are generative models based on density estimators such as Normalizing Flow models or Autoregressive models which are trained on normal data to estimate the exact probability density function of the normal data distribution, the output negative log-likelihood being used as anomaly score.

We identified the autoregressive density estimation approach relying on the Masked Autoencoder for Distribution Estimation (MADE) model as a promising approach fitting best our goal and constraint. It should be noted that this method does not belong to the Auto-Encoder family of anomaly detectors despite its name because the output anomaly scores are not derived from reconstruction errors. However, while this method was efficient to detect short transient anomalous sound artifacts, we observed lower performance on longer sustained anomalous sound artifacts (e.g. anomaly scores larger on normal parts than on anomalous parts) corresponding to some misunderstanding by the method of the differences of 2D spectro-temporal texture patterns between normal and anomalous sound spectrograms. An objective of the present disclosure is to find a countermeasure to this limitation of the MADE-based method.

The MADE-based method, like many other Deep Learning Anomaly Sound Detection methods, starts by transforming the input raw waveform sound data into 2D frequency-time spectrograms and next cuts the spectrograms into 2D matrix-like stacks of spectrogram frames (also referred to as snippets) that are easier to process individually than the full sound spectrograms thanks to the lower memory requirements. The MADE-based method, like many other Deep Learning Anomaly Sound Detection methods, continues by flattening the 2D input matrix-like snippets into 1D vector snippets (the matrix columns being concatenated into a unique vector), leading to the loss of the spectro-temporal information contained in the 2D matrix-like snippets. We made the hypothesis that this loss could be possibly responsible for the performance degradation. We consequently looked for a way to avoid this loss and found a similar approach among image-based density estimation algorithms that would accept 2D matrix-like snippets as inputs. As this approach was originally designed for image completion, we adapted it to sound processing and integrated it inside our new Anomalous Sound Detection approach.

We evaluated our approach against a standard AE baseline and the original MADE baseline using a new snippet-wise evaluation procedure which produced statistically reliable performance metrics even with small and highly unbalanced test datasets. This evaluation showed that our approach results in a significant performance improvement that brings our approach closer to an industrial application than its competitors. It is the first time such an image-based density estimation algorithm is used for Anomaly Sound Detection and it provides an efficient way to leverage the full spectro-temporal information contained in sound spectrograms when many other techniques scramble their inputs and lose this information.

### Prior Works

Density estimation methods using models such as Normalizing Flow models and Autoregressive models are methods able to tractably estimate the probability density functions of the data distributions they have been trained on. At inference time they can provide the exact estimate of the probability that a given sample belongs to the modeled data distributions. When trained on the distributions of normal sound data, they can be used to identify anomalous sound data thanks to the estimate of their probability to belong to the normal sound data distributions.

Autoregressive density estimation methods are efficient ways to model complex data distributions by casting them as the product of simpler conditional distributions, the neural networks being trained to output the parameters of the conditional distributions. Autoregressive models have been applied to raw sound data (e.g., Wavenet) or to spectrogram data computed from the raw sound data (e.g., MADE) and have produced state-of-the-art performance levels in the DCASE Task2 Challenges for Anomalous Sound Detection.

The Masked Autoencoder for Distribution Estimation (MADE) model is enforcing an autoregressive property between the different input dimensions by means of binary masks applied to the weighted connections between the neurons of a standard Autoencoder neural network made of fully connected layers. This autoregressive property is dependent on an a priori randomly defined ordering of the dimensions of its input vector. When used for Anomalous Sound Detection, it is fed with vectors obtained by flattening matrix-like snippets made from groups of consecutive frames of the spectrograms of the sound data to be processed. This matrix-to-vector flattening operation combined with the random ordering of the input vector dimensions leads to the loss of the spectro-temporal information contained in the 2D texture pattern of the spectrograms. This information loss is very likely responsible for a lower anomaly detection performance compared to the performance that would be obtained would the full 2D spectro-temporal information of the input snippets be preserved.

There is a family of autoregressive density estimation models which have been designed to process images and specifically take into account their 2D texture patterns. They derive from the seminal PixelCNN model and each member of this family brings improvements on a previously introduced model: GatedPixelCNN, PixelCNN++, PixelSNAIL and LMConv. They can estimate the exact probability of a sample image with respect to the training data distribution and have been used for image completion until now. Similarly to MADE, these models are casting complex distributions as products of simpler conditional distributions by enforcing an ordering constraint on image pixels by means of a masking mechanism. However, contrary to MADE which is feeding flattened vectors to fully connected neural networks while randomly ordering the vector dimensions, these models are feeding matrix-like images to 2D convolutional neural networks while taking care of preserving meaningful pixel orders. These models are consequently expected to better deal with the 2D spectro-temporal texture patterns of sound spectrograms when used for Anomalous Sound Detection.

### Proposed Method

Our objective is to avoid the loss of the spectro-temporal information contained in the 2D texture pattern of the original snippets, information loss due to the flattening of the matrix-like snippets into vectors which are given to the MADE model used for Anomalous Sound Detection. We need to modify the MADE model so that it is able to process the original 2D spectro-temporal texture patterns of the input snippets: the fully connected layers must be replaced by 2D convolutional layers and the masking mechanism modified accordingly. This is exactly what the PixelCNN-related models cited above are doing. Consequently, we opted to use one of them and we selected the one making use of Locally Masked Convolutions: the LMConv model. This model is the most recent model and it appears to be the most efficient to take into account the pixel ordering in the 2D snippets, hence it is the best method to process efficiently the 2D spectro-temporal information contained in the sound spectrograms.

The LMConv model enables order-agnostic density estimation with convolutional architectures by masking locally the convolution features rather than the inputs or the network connections. Enabling arbitrary pixel orders allows easy ensembling of multiple networks with different pixel orders sharing the same network weights, leading to the best overall inter-pixel connections. For image completion, which is the original application of the model, it removes the blind spots the other models were suffering from. For Anomalous Sound Detection, which is the retargeted application of the model, it allows keeping the spectro-temporal information contained in the 2D spectrogram snippets when estimating the density of the normal sound distribution, contrary to the MADE model which was losing this spectro-temporal information.

### Processing Pipeline

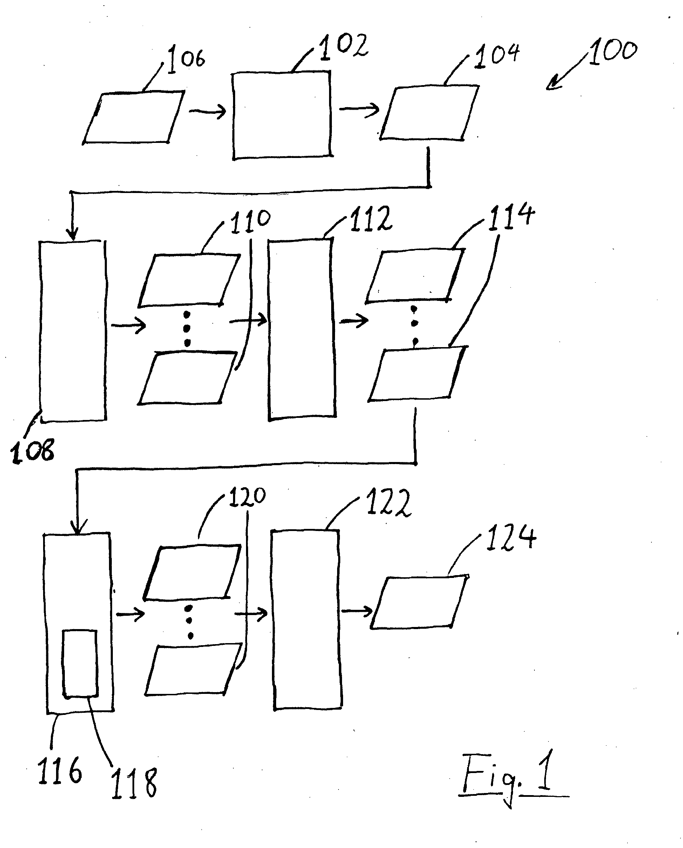

A system, or processing pipeline (100), in accordance with the present disclosure to accomplish the above-described goals will now be discussed in more detail with reference to Figure 1.

In order to be used for Anomalous Sound Detection, a locally masked convolution method (e.g., encapsulating the above-described LMConv model) has been integrated into a processing pipeline inspired by the processing pipeline designed for usage of the MADE model for Anomalous Sound Detection. It should be noted that the term 'model' is generally used to refer to a specific algorithm (e.g., a neural network or learning algorithm), whereas the term method (e.g., the above-mentioned locally masked convolution method) is used to refer to the package of the model itself as well as associated procedures and operations (e.g., initialization procedures, training procedures, data normalization procedures or other procedures or processes required for the model to operate). In the following, reference will generally be made to models, but it should be understood that reference could equally well be made to the term method instead. The processing pipeline, in some examples, comprises one or more pre-processing modules (not shown), which are used to transform input data into a form that can be processed by the modules of the processing pipeline (e.g., the LMConv model) and a post-processing module formatting the model output to the task of Anomalous Sound Detection.

The composition of the full processing pipeline (100) built around the locally masked convolution method is as follows:
a spectrogram processor module (102) inside which spectrograms (104) are computed from a sound file or digital sound recording (106), which as discussed above, is in a form that can be processed by modules of the processing pipeline;
a snippet extractor module (108) inside which the spectrograms (104) are split into series of two-dimensional spectrogram snippets (110);
a snippet enhancer module (112) inside which the two-dimensional spectrogram snippets are transformed into enhanced two-dimensional spectrogram snippets (114) that can be fed to the following module;
a density estimator module (116) with a locally masked convolution model (118) at its core, which is fed with the enhanced two-dimensional spectrogram snippets (114) and outputs a snippet anomaly score (120) for each of the two-dimensional spectrogram snippets;
an anomaly score processing module (122) inside which the anomaly score for each spectrogram snippet is used to determine an indication (124) of the anomaly of the sound file.

This processing pipeline provides a number of advantages over known pipelines, some of which will be briefly discussed for illustrative purposes.

When two-dimensional spectrograms or snippets thereof are flattened into one-dimensional vector-like inputs for use in an algorithm, the information contained in the specific two-dimensional texture pattern of the original two-dimensional spectrograms is scrambled and lost. In particular the spectro-temporal correlations are lost. Further, in known systems, information contained in the temporal context between neighbouring frames is kept, but information contained in the frequency context between neighbouring frequency bins in within the same frame is degraded. Consequently the two-dimensional spectro-temporal information contained inside the original two-dimensional snippets is not fully recovered.

In the present invention, the two-dimensional spectrogram snippets are not flattened and are provided to the locally masked convolutional method. This allows the full spectro-temporal information to be taken into account,

Standard Mel frequency scaling, commonly used in known anomalous sound detection systems, introduces human bias (i.e., it renders high frequencies less perceptible), which can degrade anomaly frequencies.

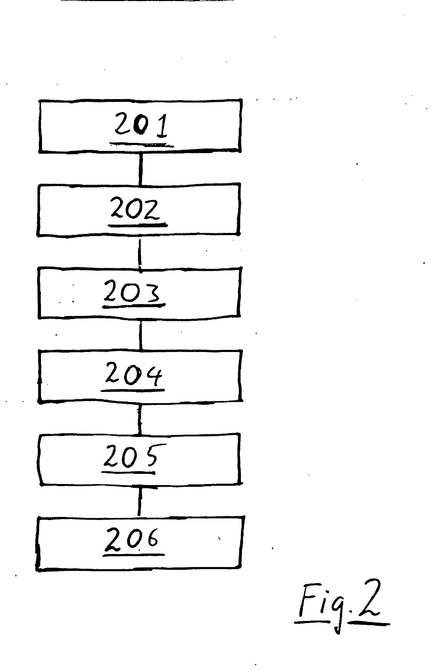

As will be discussed in the following, the present invention proposes a new frequency scaling transform without human bias, with a limited frequency resolution reduction and improved temporal resolution
In order to aid the understanding of the present disclosure, a method for detecting anomalous sounds in accordance with the present disclosure will now be described with reference to Figure 2. The method may, for example, be implemented in the processing pipeline of Figure 1.

In a first step (201), a digital sound recording (106) comprising a recording of a device is received. The digital sound recording may be received in any suitable manner by way of a suitable reception mechanism. For example, the reception mechanism may be a sound file reader that reads the contents of a sound file and transforms it into the digital sound recording. In another example, the reception mechanism is a digital sound recorder. In an example, the digital sound recording is received at the spectrogram processor module (102). In some examples, the digital sound recording may additionally be pre-processed by one or more pre-processing modules, for example to render the digital sound recording processable or to improve the processing steps of the method before being received at the spectrogram processor module (102). Examples of pre-processing operations include, but are not limited to: data normalization, data filtering (e.g., noise removal, source separation and/or selection).

In a second step (202), the received digital sound recording (106) is transformed into a two-dimensional frequency-time spectrogram (104). The two-dimensional frequency-time spectrogram is divided into a plurality of spectrogram frames representative of the time range of the spectrogram, each spectrogram frame being divided into a plurality of frequency bins representative of the frequency range of the spectrogram. The spectrogram may be computed or derived in a suitable manner and by using a suitable module or technique. In an example, the two-dimensional frequency-time spectrogram is a Short-Time Fourier Transform, STFT, spectrogram. In an example, the computation of the two-dimensional frequency-time spectrogram is performed in the spectrogram processor module (102).

In a third step (203), the two-dimensional frequency-time spectrogram (104) is split into a plurality of spectrogram snippets (110), wherein each spectrogram snippet comprises a plurality of consecutive spectrogram frames, each spectrogram frame being sub-divided into a plurality of frequency bins representative of a frequency range of the spectrogram. The splitting step may be performed in a suitable fashion by a suitable component. An exemplary implementation of the splitting step will be discussed in more detail in the following. In an example, the splitting step is performed by the snippet extractor module (108).

In a fourth step (204) snippet enhancement is performed on each of the plurality of spectrogram snippets (110). The snippet enhancement may be performed in a suitable fashion by a suitable component. An exemplary implementation of the snippet enhancement step will be discussed in more detail in the following. In an example, the snippet enhancement is performed by the snippet enhancer module (112).

In a fifth step' (205), using a locally masked convolution model, a snippet anomaly score (120) is derived for each of the plurality of enhanced spectrogram snippets. The snippet anomaly score may be derived in any suitable way using a suitable derivation mechanism, one exemplary implementation of which will be discussed in more detail in the following.

In a sixth step (206), an indication (124) of the anomaly of the digital sound recording is determined based on the derived plurality of snippet anomaly scores (120). The indication of the anomaly may be determined in any suitable manner using a suitable module or component. In an example, the determination step is performed by the anomaly processing module (122).

In the above, the processing pipeline and a method that may be implemented in said processing pipeline have been discussed in general terms. Each of the individual elements of the processing pipeline and methods that may be implemented in these modules will be discussed in more detail in the following.

### Spectrogram Processor

In the spectrogram processor module, each digital sound recording (e.g., raw waveform input sound data) is transformed into a Short-time Fourier Transform (STFT) spectrogram. Subsequently, the amplitude of the STFT spectrogram is kept and scaled with logarithmic dB scale.

### Snippet extractor module

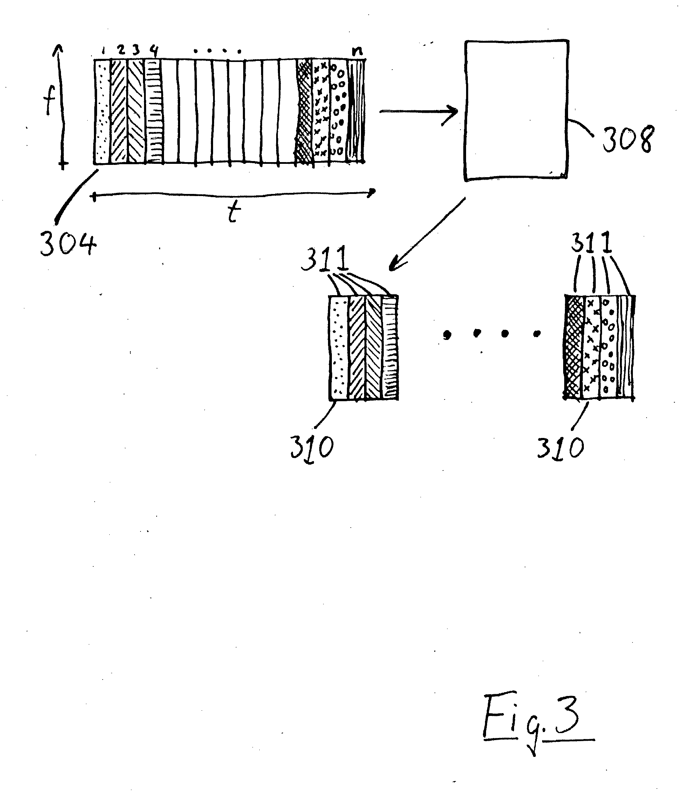

The snippet extractor module will be briefly discussed with reference to Figure 3, in which reference numerals referring to similar components are identical to those of Figure 1 but with prefix "3" instead of "1". In the snippet extractor module (308), an STFT dB amplitude spectrogram (304) is split into a series of spectrogram snippets (310), each snippet comprising a number of consecutive spectrogram frames (311). The splitting operation is controlled by two parameters: the duration of a snippet and the duration of the overlap between consecutive snippets. Known snippet extractors normally output flattened vector snippets (i.e, spectrogram snippets whose spectrogram frames are all concatenated into a single flat vector), whereas the snippet extractor of the present disclosure outputs two-dimensional, or matrix-like, spectrogram snippets.

Subsequent to being output by the snippet extractor module, the two-dimensional spectrogram snippets are sent to the following steps. In some examples, each spectrogram snippet is sent individually. In other examples, the snippet extractor module decomposes the entire plurality of two-dimensional spectrogram snippets into one or more batches, each batch containing at least one spectrogram snippet. The size of any of the batches may be defined in a suitable manner.

### Snippet Enhancer Module

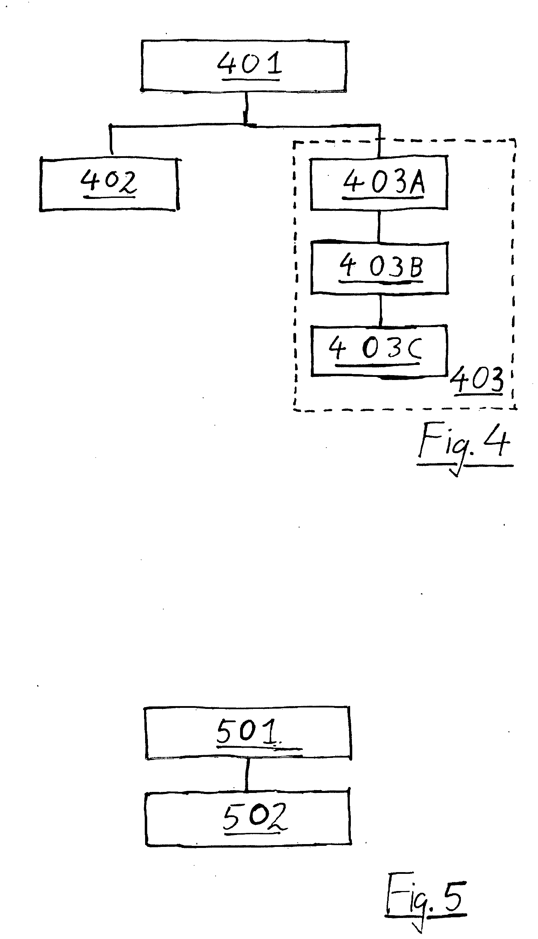

In the snippet enhancer module, several transforms can be applied to the spectrogram snippets before they are sent to the density estimator module. An exemplary implementation of a snippet enhancement step will now be discussed with reference to Figure 4.

In a first optional snippet enhancement step (401), a frequency weighting transform is applied. This may be applied using a standard frequency weighting scheme such as A or D. It can be applied to emphasize some frequencies over others. It should be noted that this step is optional, and that in some examples no weighting transform is applied. In other examples, alternative transforms may be performed.

In a second snippet enhancement step (402), a standard frequency scaling transform is applied. The standard frequency scaling transform being applied may be one of: a Mel frequency scale; a Bark frequency scale; or a Gammatone frequency scale. These frequency scaling transform are applied in order to rescale the frequency space and reduce the frequency resolution with a non-linear frequency bin distribution.

Such frequency scaling transforms or schemes can introduce biases (e.g., human perception bias). Additionally, they may potentially degrade the anomaly frequencies when they are applying human-based scaling filters: if the anomaly frequencies are outside the human perception range, they will be degraded.

As an alternative to the second snippet enhancement step, in an example, a step of applying (403) a custom frequency scaling transform is used. By using a custom frequency scaling transform as much of the frequency resolution as possible can be placed within a target frequency range (e.g., within a frequency range wherein anomalies are expected). Further, the temporal resolution can be increased. The step of applying (403) comprises a step wherein the spectrogram processor is used to recompute (403A) the two-dimensional frequency-time spectrogram for the digital sound recording restricted to each of the spectrogram snippets using a FFT window size that is reduced from an initial value to a selected value. This leads to a reduction in the number of frequency bins (i.e., a reduced frequency resolution). Further it leads to an increase in the number of frames (i.e., an increased temporal resolution) in each spectrogram snippet.

The initial FFT window size may have any suitable value. In an example, the initial value of the FFT window size is n_fft=1024.. The selected value of the FFT window size may have any suitable or desired value, including (but not limited to): 1024, 512, 256, 128 or 64.

In some examples, the step of applying (403) a custom frequency scaling transform further comprises a step of cropping (403B) at least one of the frequency bins of each of the plurality of spectrogram snippets. For the avoidance of doubt, the term 'cropping' is used in the present disclosure to describe the removal of one or more frequency bins from the plurality of frequency bins within a spectrogram snippet. In other words, the frequency range of the spectrogram snippet is being cropped by the removal of the one or more frequency bins.

. Any suitable number of frequency bins may be cropped. In an example, the top half frequency bins in each the plurality of spectrogram snippets are cropped. This reduces the number of frequency bins whilst keeping the original linear frequency bin distribution. In an example, at least one frequency bin outside of a target frequency range is cropped. The target frequency range may be any suitably defined frequency range. In an example, it is an a priori known frequency range inside which it is expected to find anomaly frequencies. In another example, all frequency bins outside the target frequency range are cropped.

In some cases, it may be necessary to apply further frequency resolution reduction after the above-described steps. In such an example, the step of applying (403) further comprises a step of down-sampling (403C) the frequency bins. This may be performed in a suitable manner and by way of a suitable methodology. In one example, the down-sampling step is carried out by averaging the content of neighboring frequency bins.

It will be appreciated that, whilst described in sequence, the various snippet enhancement steps may be applied in combination or in isolation in various implementations. In one example, the snippet enhancement step comprises only applying a frequency weight transform. In another example, the snippet enhancement step comprises only applying a frequency scaling transform.

A number of exemplary specific implementations of the step of applying a frequency scaling transform will now be discussed. Purely for exemplary and illustrative purposes, it will be assumed that the target number of frequency bins is 128 or 64. The sampling rate used is 51.2kHz and the target anomaly frequency range is 500Hz-4000Hz.

In a first exemplary frequency scaling transform, in a first step, the spectrogram snippets are determined with a FFT window size n_fft=1024. This results in spectrogram snippets that have 513 frequency bins. In a second step, a top half of the full frequency range is cropped (i.e., the frequency range from 12.8 kHZ-25.6 kHz). In other words, the number of frequency bins is reduced to 256. In a third step, the number of frequency bins is down-sampled to either of 128 frequency bins or 64 frequency bins.

In a second exemplary frequency scaling transform, in a first step, the spectrogram snippets are determined with a FFT window size n_fft=512, which results in spectrogram snippets having 257 frequency bins. In this example, the top half of the frequency ranges (i.e., the frequency range from 12.8 kHz-25.6 kHz) is cropped, which reduces the number of frequency bins in each spectrogram snippet to 128. In an optional third step, the number of frequency bins may be down-sampled to 64 frequency bins.

In a third exemplary frequency scaling transform, in a first step, the spectrogram snippets are determined with a FFT window size n_fft=256, which results in a spectrogram snippets having 129 frequency bins.. In this example, the top half of the frequency ranges (i.e., the frequency range from 12.8 kHz-25.6 kHz) is cropped, which reduces the number of frequency bins in each spectrogram snippet to 64 frequency bins.

### Density Estimator Module

An exemplary implementation of the step of deriving a snippet anomaly score will now be discussed in more detail with reference to Figure 5. It will be appreciated that this is purely for illustrative purposes and that alternative implementations may be envisaged within the scope of the present disclosure. Illustrative and non-limiting examples of such alternative implementations includes density estimation models dedicated to 2D image data, such as the other models in the PixelCNN family, provided they are able to process non-square rectangular images. In some of such examples, the models may be modified in a manner substantially or functionally similar to the modifications described above and in the following.

In a first deriving step (501), the plurality of enhanced spectrogram snippets (114) is received. Each spectrogram snippet has a height equal to the number of frequency bins and has a width equal to the number of spectrogram frames in the snippet. In some examples, the receiving step may comprise one or more pre-processing sub-steps, e.g., to format or encode the plurality of enhanced spectrogram snippets so as to enable or facilitate processing by the locally masked convolution model. Examples of such pre-processing sub-steps include, but are not limited to: data normalization; or data filtering (e.g., noise removal).

In this implementation, the locally masked convolution model comprises a computing scheme for pre-computed pixel ordering that is adapted to rectangular inputs.

In this implementation, the locally masked convolution model further comprises local masking procedures that are adapted to rectangular inputs and rectangular convolutional kernels.

In a second deriving step (502), the snippet anomaly score is computed for each spectrogram snippet in the plurality of spectrogram snippets using the locally masked convolution method. As discussed above, the implementation of the computation or derivation of the snippet anomaly score may be carried out in a number of different ways. In the present example, the snippet anomaly scored is derived by computing, in the locally masked convolution method, a negative log-likelihood of each of the plurality of spectrogram snippets.

It will be appreciated that these steps are exemplary and illustrative, and that alternative implementations of either or both of the first and second deriving steps may be envisaged within the scope of the present disclosure. For example, whilst described as discrete steps, both the first and second deriving steps may be carried out in a single deriving step. In other examples, whilst described as part of the deriving step, the pre-processing step (501) is carried out as part of one of the other method steps of the overall method.

The core of the density estimator module is the locally masked convolution model. As discussed above, in the present example, the chosen model is the LMConv model, which is trained on a dataset of two-dimensional snippets derived from spectrograms of normal sounds computed by the same spectrogram processor as the one used for anomaly sound detection, snippets which were extracted and enhanced by the same snippet extractor and snippet enhancer modules as the ones used in the pipeline for anomaly sound detection. The LMConv model is used to estimate the negative log-likelihood of any new input two-dimensional spectrogram snippet.

Several modifications were applied to adapt the original LMConv model, which is typically used to process image data rather than sound data, to the task of processing 2D spectrogram snippets. First, and as discussed above, the shape of the input images is no longer fixed arbitrarily to a square shape but is identical to the non-square rectangular shape of each spectrogram snippet output by the snippet enhancer module: the input image height is equal to the number of frequency bins and the input image width is equal to the number of spectrogram frames in the snippets. Accordingly, the pre-computed pixel ordering schemes are adapted to the rectangular input images. Finally, the local masking procedures are adapted to rectangular input images and rectangular convolutional kernels in order to adjust these kernels to the potentially different frequency and temporal scales: the kernel height now depends on the width of the frequency context while the kernel width depends on the width of the temporal context.

### Anomaly Score Processing Module

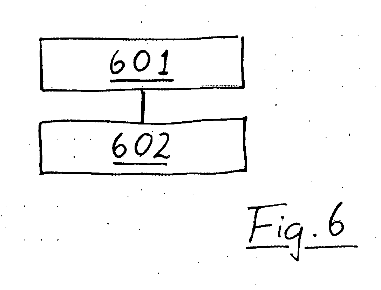

An exemplary implementation of the step of determining an indication of an anomaly for the received digital sound recording will now be discussed in more detail with reference to Figure 6. This step may, for example, be implemented in the anomaly score processing module described above with reference to Figure 1.

In a first determining step (601), the snippet anomaly scores for each of the spectrogram snippets are combined into a sound anomaly score. The snippet anomaly scores may be combined in any suitable or advantageous manner using a suitable methodology. In an example, the snippet anomaly scores for each of the spectrogram snippets are averaged. In other examples, the snippet anomaly scores for each of the spectrogram snippets are combined by way of: weighted algebraic mean; geometric mean, M-estimator; or outlier-filtering combined with weighted algebraic mean. Additional combination methodologies may be envisaged within the scope of the present disclosure.

In a second determining step (602), the sound anomaly score is compared with an anomaly threshold.

If the anomaly threshold is exceeded, the indicator of an anomaly is set to true. Any number of relevant or suitable subsequent actions or operations can be triggered as a result. For example, a flag can be raised to alert a user that an anomaly has been detected.

If the sound anomaly score is below the anomaly threshold, the indicator of an anomaly is set to false. Relevant subsequent actions can then be taken by the system, a user or other components. In an example, the method is restarted.

An experimental setup used to test the processing pipeline and the above-described methods will now be discussed in more detail.

### Experimental Setup

The models were evaluated on a private industrial dataset comprising three subsets: one training dataset, one validation dataset and one test dataset. Due to industrial confidentiality, we cannot make this dataset public, nor can we name precisely the category of products whose sounds were recorded. This category is very similar to the Slide Rail category of the MIMII dataset used for DCASE2020 Task2 Challenge and it corresponds to a vehicle part with opening and closing operating modes. Each recorded sound is produced by a different product instance (contrary to the MIMII dataset where a limited number of different instances were recorded several times).

On the one hand, the training and validation datasets contain only normal sounds of approximately 10s which have been recorded in a real factory setting with one microphone at a sampling rate of 51.2 kHz. These sounds have a quite complex internal structure comprising four different operational phases with slightly different stationary sound statistics and three normal transient overshooting sound artifacts at the transitions between the operational phases. There are 500 training sounds and 50 validation sounds.

On the other hand, the test dataset comprises 10 anomalous sounds of 10s duration which have been artificially created by mixing one normal sound with several sustained (long) anomalous artifacts sounds of different durations, locations, and anomaly-to-normal sound ratio levels. These anomalous artifacts sounds are sustained "scratching" sounds with increased acoustic roughness. They simulate the effects of physical perturbations applied to the machine mechanism (increased friction). The duration of the sustained anomalous artifacts represents less than half the full sound duration. Consequently, the resulting anomalous sounds contain both normal and anomalous parts. This artificial sound creation procedure allowed us to have full control on the quality of the test sounds.

### Benchmarking procedure

For benchmarking, we have compared the performance of our new method with the LMConv model at its core with already existing methods using a MADE model and of a baseline Autoencoder (AE) model. Both the MADE and AE models are made of fully connected layers receiving as inputs the snippets flattened into vectors. Doing so, we can evaluate the impact of using matrix-like snippets and convolutional layers vs. using vector snippets and fully connected layers.

We wanted to use the same metrics as those used in the DCASE2020 Task2 Challenge i.e., the ROC AUC. The ROC curve and its associated Area Under Curve (AUC) values are useful indicators regarding the ability of an anomaly detection algorithm to detect as many real anomalies as possible (measured by the True Positive Rate) while avoiding to detect false anomalies (measured by False Positive Rate). The closer the ROC AUC value is to 1 (corresponding to a steep ROC curve closer to the top-left figure corner), the better the detection algorithm.

However, because our test dataset only contains anomalous sounds, we cannot use the sound-wise ROC AUC metric from DCASE2020 Task2 Challenge. Instead of this, we decided to use a new snippet-wise ROC AUC metric. This was made possible because our anomalous sounds contain both normal and anomalous parts, thus leading to thousands of normal and anomalous snippets: with a snippet duration of 100ms and a snippet overlap duration of 35ms, each test sound is decomposed into 292 snippets, thus leading to 2920 test snippets in total. Snippet-wise ground truth labels have been set manually from the starting time and the ending time of each sustained anomalous artifact sound: out of 2920 test snippets, there are 1969 snippets with normal ground truth labels and 951 snippets with anomaly ground truth labels, this is enough to provide statistically reliable snippet-wise ROC curves and ROC AUC metric. These snippet-wise ROC curves are computed considering the snippet-wise ground truth labels and snippet-wise predicted labels obtained by thresholding the snippet-wise anomaly scores with a variable threshold.

Using a snippet-wise ROC AUC metric allows using a very unbalanced and small sound dataset (with only sound-wise labelled anomalous sounds). In the presence of short transient anomalous artifacts, a snippet-wise metric also allows evaluating the ability of a method to detect and localize these individual anomalous artifacts inside the whole anomalous sounds, leading to a thinner-grained evaluation. Finally, by plotting snippet-wise ground truth labels, anomaly scores and predicted labels on top of the processed sound spectrograms, we have a tool to qualitatively evaluate how a detection method reacts to the different types of sound artefacts visible in the spectrograms.

### Evaluated models

We have compared our new method with the LMConv model at its core with existing methods using a baseline Autoencoder (AE) model and a state-of-the-art MADE model. The implementation of our LMConv model is the one provided by its creator inside which several items have been modified as explained above. The implementation of the Autoencoder AE model is the one provided by the organizers of DCASE2020 Task2 Challenge. The implementation of the MADE model is the one provided by one competitor of the DCASE2020 Task2 Challenge which we used in a simplified configuration (no conditioning on the machine identity and no proxy outliers) because we wanted to use it only for its density estimation ability, similarly to the LMConv model. These models have been trained on our dataset and their key preprocessing parameters have been tuned by grid search to provide the best performances. The best preprocessing parameters are compiled in the following Table. The other model and training hyper-parameters are the original ones provided by the creators of the different models.

| Parameter | AE | MADE | LMConv |
|---|---|---|---|
| Snippet duration (ms) | 100 | 100 | 100 |
| Snippet width (frames) | 9 | 39 | 39 |
| Snippet height (frequency bins) | 64 | 64 | 32 |
| Frequency weighting method | Identity | D | A |
| Frequency scaling method | Mel (frame length=1024 samples) | Custom (frame length=256 samples) | Custom (frame length=256 samples) |
| Network input type | Vector | Vector | Matrix |

It will be understood that various modifications and/or improvements obvious to the person skilled in the art may be made to the various embodiments of the invention described in the present description without departing from the scope of the invention defined by the appended claims.

## Claims

1. A method for detecting anomalous sounds, the method comprising:
receiving a digital sound recording;
transforming the received digital sound recording into a two-dimensional frequency-time spectrogram;
splitting the two-dimensional frequency-time spectrogram into a plurality of spectrogram snippets, wherein each spectrogram snippet comprises a plurality of consecutive spectrogram frames, each spectrogram frame being sub-divided into a plurality of frequency bins representative of a frequency range of the spectrogram;
performing snippet enhancement on each of the plurality of spectrogram snippets;
deriving, using a locally masked convolution method, a snippet anomaly score for each of the plurality of enhanced spectrogram snippets; and
determining an indication of the anomaly of the received digital sound recording based on the derived plurality of snippet anomaly scores.

2. A method according to claim 1, wherein the spectrogram is a Short-Time Fourier Transform spectrogram.

3. A method according to claim 1 or 2, wherein the step of performing snippet enhancement comprises either or both of:
applying a frequency weighting transform; or
applying a frequency scaling transform.

4. A method according to claim 3, wherein the step of applying a frequency scaling transform comprises applying one of: a Mel frequency scale; a Bark frequency scale; or a Gammatone frequency scale.

5. A method according to claim 3 or 4, wherein the step of applying a frequency scaling transform comprises:
recomputing the two-dimensional frequency-time spectrogram for the digital sound recording restricted to each of the spectrogram snippets using a FFT window size that is reduced from an initial value to a selected value, thereby leading to a reduced number of frequency bins in each of the plurality of spectrogram snippets and an increased number of frames in each of the plurality of spectrogram snippets.

6. A method according to claim 5, further comprising a step of cropping at least one of the frequency bins of each of the plurality of spectrogram snippets.

7. A method according to claim 6, wherein the step of cropping comprises:
cropping at least one frequency bin representative of a frequency range outside of a target frequency range.

8. A method according to any of claims 5 to 7, further comprising a step of down-sampling the remaining frequency range to obtain a determined number of frequency bins.

9. A method according to any of claims 1 to 8, wherein the step of deriving a snippet anomaly score comprises deriving, in the locally masked convolution method, a negative log-likelihood for each of the plurality of enhanced spectrogram snippets.

10. A method according to claim 9, wherein the step of deriving a snippet anomaly score further comprises:
receiving, in the locally masked convolution method, the plurality of enhanced spectrogram snippets, each spectrogram snippet having a height equal to the number of frequency bins and having a width equal to the number of spectrogram frames in the snippet.

11. A method according to any of claims 1 to 10, wherein the step of determining an indication of an anomaly for the received sound recording comprises:
combining the snippet anomaly scores into a sound anomaly score;
comparing the sound anomaly score with an anomaly threshold; and
if the sound anomaly score exceeds the anomaly threshold setting the indication of an anomaly to true, or
if the sound anomaly score is below the anomaly threshold setting the indication of an anomaly to false.

12. A method according to claim 11, wherein the step of combining the snippet anomaly scores comprises averaging the snippet anomaly scores.

13. A non-transitory ' computer readable medium including program instructions for causing a computer to carry out the method steps of any of claims 1 to 12.

14. A computer system comprising a processing unit operable to carry out the method steps of any of claims 1 to 12.

15. A computer system according to claim 14, comprising:
a spectrogram processor module (102);
a snippet extractor module (108);
a snippet enhancer module (112);
a density estimator module (116) comprising a locally masked convolution method,
wherein the locally masked convolution method comprises a computing scheme for pre-computed pixel ordering that is adapted to rectangular inputs, and
wherein local masking procedures in the locally masked convolution method are adapted to rectangular inputs and rectangular convolutional kernels; and
an anomaly score processing module (122).
